# EUROPÄISCHE PATENTSCHRIFT

(11) **EP 1 873 404 B1**
(45) Veröffentlichungstag und Bekanntmachung des Hinweises auf die Patenterteilung: **22.05.2013**
(21) Anmeldenummer: 07405156.6
(22) Anmeldetag: 01.06.2007
(51) Int. Cl.: F16B 12/20, E06B 3/54

(54) **Montageelement für flächige Bauteile**
Mounting element for flat components
Elément de montage pour composants plats

(30) Priorität: 26.06.2006 CH 10242006
(43) Veröffentlichungstag der Anmeldung: 02.01.2008
(73) Patentinhaber: Alfred Schmid AG Gossau, 9200 Gossau (CH)
(72) Erfinder: Schmid, Daniel, 9200 Gossau (CH)
(74) Vertreter: Hasler, Erich

(56) Entgegenhaltungen:
- CH-A- 662 599
- US-A- 3 676 898
- US-A- 4 353 663

## Beschreibung

Die Erfindung betrifft ein Montageelement für flächige Bauteile gemäss dem Oberbegriff des Patentanspruchs 1.

In vielen Anwendungen ist es erforderlich, flächig ausgebildete Baueile miteinander zu verbinden. Beispiele dafür sind die Montage von furnierten oder beschichteten Täferelementen und Wandverkleidungen oder die Montage von Blenden, Sitzbanklehnen, Windschutzleisten, Spiegeln. Auch bei der Verbindung von Türblättern von Haustüren oder schallhemmenden Türen kommen Montageelemente zur Anwendung, die für den Betrachter unsichtbar angeordnet sind und mit korrespondierend ausgebildeten Montageelementen zusammenwirken. Aus der CH 662 599 ist ein topfförmiges Montageelement bekannt, das in eine Bohrung in der Fläche des Bauteils eingesetzt und dort durch Verschrauben fixiert ist. Das Montageelement ist derart in die Fläche des Bauteils versenkt, dass nur ein aus dem topfförmigen Basisteil herausragender Keilhaken die Fläche des Bauteils überragt. Der Keilhaken des Montageelements hintergreift den abragenden Keilhaken eines zweiten Montageelements, das um 180° verdreht in einer Bohrung in der Fläche eines zweiten flächigen Bauteils fixiert ist. Die miteinander verhakten Keilhaken der zwei Montageelemente sorgen für eine unsichtbare, zuverlässige Verbindung der beiden aneinanderliegenden Flächen der beiden Bauteile.

Während mit diesem bekannten Montageelement flächige Bauteile sehr elegant und für den Betrachter unsichtbar miteinander verbunden werden können, ist seine Montage und Fixierung in der Bohrung in der Fläche eines Bauteils relativ aufwendig. Bei Bauteilen mit genügend grossen Wandstärken wird das Montageelement durch senkrecht in Bohrungen im Bodenteil des topfförmigen Montageelements geschraubte Schrauben fixiert. Bei Bauteilen mit kleineren Wandstärken erfolgt die Fixierung des Montageelements in der Bohrung mit Hilfe von schräg durch Bohrungen in der umlaufenden Wandung des topfförmigen Montageelements eingedrehte Schrauben. Anstelle von Schrauben können auch Nägel durch die Bohrungen des Montageelements in das Bauteil getrieben werden.

Es ist unmittelbar einsichtig, dass die Fixierung des Montageelements mit Schrauben oder Nägeln relativ zeitaufwendig ist. Es ist nur sehr schwer möglich, die Lage des in die Bohrung eingesetzten Montageelements zu korrigieren, sollte dies beispielsweise aufgrund einer ungenauen Messung erforderlich sein. Auch bei genauer Messung kann es beim Schraubvorgang zu einer leichten Verdrehung des Montageelements in der Bohrung kommen, was zu Ungenauigkeiten bei der Montage an einem zweiten Bauteil führen kann.

Aufgabe der vorliegenden Erfindung ist es daher, die aus dem Stand der Technik bekannten Montageelemente für flächige Bauteile dahingehend zu verbessern, dass eine schnellere Montage ermöglicht ist. Es soll ein Montageelement geschaffen werden, welches es einfach und schnell erlaubt, seine Lage innerhalb der Bohrung in der Fläche eines Bauteils zu korrigieren, beispielsweise um einige Grad im oder entgegen dem Uhrzeigersinn zu verdrehen.

Zur Lösung dieser Aufgaben ist ein Montagelement für flächige Bauteile vorgeschlagen, welches die im kennzeichnenden Abschnitt des Patentanspruchs 1 angeführten Merkmale aufweist. Weiterbildungen und/oder bevorzugte Ausführungsvarianten der Erfindung sind Gegenstand der abhängigen Patentansprüche.

Das erfindungsgemässe Montageelement für flächige Bauteile besitzt ein zylindrisches Basisteil mit einer Umfangsfläche und einem Anbindemittel, das zur Verbindung mit einem korrespondierend ausgebildeten Montageelement an einem zweiten Bauteil ausgebildet ist. Das Basisteil weist wenigstens einen Spannkörper auf, der in einer Ausnehmung des Basisteils radial verschiebbar angeordnet ist. Ein Stellelement ist derart verstellbar, dass der Spannkörper aus einer Ausgangsposition, in seine Stirnfläche einen Abschnitt der Umfangsfläche des Basisteils bildet, radial in eine Lage verschiebbar ist, in welcher er die Umfangsfläche des Basisteils überragt.

Das Montageelement wird in gewohnter Weise in eine Sacklochbohrung in der Oberfläche eines Bauteils eingesetzt. Zur Fixierung des Montageelements in der Bohrung wird der Spannkörper durch Betätigen des Verstellelements radial verschoben. Dabei überragt er die Umfangsfläche des Basisteils des Montageelements und verspreizt dieses in der Bohrung. Die Reibkraft zwischen dem Stellelement und dem Basisteil verhindert ein selbsttätiges Zurückgleiten des Spannkörpers. Die Festlegung des Montageelements ist einfach und schnell bewerkstelligbar. Eine Fehllage des Montageelements kann sehr einfach korrigiert werden, indem durch Betätigen des Stellelements der Spannkörper wieder gelöst wird. Nach der Korrektur der Lage des Montageelements wird das Basisteil durch erneute Betätigung des Stellelements und radiales Ausstellen des Spannkörpers wieder in der Sacklochbohrung fixiert.

Der Spannkörper ist in der Ausnehmung im Basisteil radial verschieblich aber immer noch so fest gehalten, dass er beim Hantieren des Montageteils nicht herausfällt. Damit sichergestellt ist, dass der Spannkörper in der Ausnehmung des Basisteils nicht verkanten kann, erweist es sich von Vorteil, wenn der Spannkörper in der Ausnehmung des Basisteils radial zwangsgeführt ist.

Für eine besonders zweckmässige und wirksame Zwangsführung weist der Spannkörper seitliche Führungsnuten auf und ist die Ausnehmung des Basisteils mit zwei seitlichen Führungsschienen versehen, die in die Führungsnuten des Spannkörpers eingreifen. Die seitliche Führung erleichtert auch die Montage des Spannkörpers in der Ausnehmung des Basisteils.

Das Stellelement zur radialen Verstellung des Spannkörpers kann beispielsweise ein Keilelement sein, dessen axiale Verschiebung zu einer radialen Verschiebung des Spannkörpers führt. Aus fertigungstechnischen Gründen und wegen der einfacheren Betätigung ist das Stellelement als eine Exzenterschraube ausgebildet. Die Exzenterschraube ist zwischen dem Spannkörper und dem Basisteil angeordnet. Durch Verdrehen der Exzenterschraube drückt deren exzentrisch ausgebildeter Körper den Spannkörper radial nach aussen. Die Reibungskräfte zwischen der Exzenterschraube und dem Basisteil verhindern ein selbsttätiges Zurückdrehen der Exzenterschraube und dadurch ein radiale Zurückgleiten des Spannkörpers. Dies kann auch noch dadurch unterstützt werden, dass der an die Wandung der Ausnehmung im Basisteil angrenzende Abschnitt der Exzenterschraube eine unrunde Kontur aufweist. Zur Erleichterung des Verdrehens der Spannschraube weist diese einen Kopf auf, der mit einem Eingriffsmittel für ein Schraubwerkzeug versehen ist. Beispielsweise kann der Kopf einen einfachen Schlitz aufweisen oder mit einer Torx-, Kreuzschlitz- oder Sechskantaufnahme versehen sein.

Die Exzenterschraube ist vorzugsweise unverlierbar im Spannkörper gehalten. An seiner dem Kopf der Exzenterschraube zugewandten Seite ist der Spannkörper mit einer U-förmigen Ausnehmung versehen. Der Abstand der U-Schenkel ist gleich oder geringfügig kleiner als der Aussendurchmesser des Kopfes der Exzenterschraube, so dass die U-Schenkel den Kopf klemmend umgreifen.

Die Stirnfläche des Spannkörpers, die im montierten Zustand gegen die Bohrungswandung gepresst wird, ist zweckmässigerweise mit in Umfangsrichtung verlaufenden, schneidenartigen Profilierungen versehen. Die schneidenartigen Profilierungen graben sich in die Bohrungswandung und verhindern ein unbeabsichtigtes Verdrehen des Montageelements.

Mit Vorteil ist die Exzenterschraube mit einem Anschlag versehen, der die Verdrehung der Exzenterschraube begrenzt. Der Anschlag verhindert ein Überdrehen der Exzenterschraube und teilt dem Anwender mit, dass die Exzenterschraube im erforderlichen Ausmass verdreht worden ist. Beispielsweise ist der Anschlag derart ausgebildet und an der Exzenterschraube angeordnet, dass von der Ausgangsstellung bis zur maximalen Ausstellung des Spannkörpers die Exzenterschraube um 90° verdreht werden muss.

Grundsätzlich reicht ein Spannkörper für die Fixierung des Montageelements in einer Sacklochbohrung aus. Zweckmässigerweise weist das Basisteil drei Spannkörper auf, die in Ausnehmungen radial verschiebbar angeordnet und über zugeordnete Exzenterschrauben verstellbar sind. Die drei Spannkörper erlauben eine noch exaktere Festlegung der Lage des Montageelements in der Sacklochbohrung in der Fläche eines Bauteils. Aus Symmetriegründen und wegen der gleichmässigeren Verteilung der Spreizkräfte, welche die Spannkörper im montierten Zustand auf die Bohrungswandung ausüben, sind die Spannkörper in gleichen Winkelabständen voneinander angeordnet.

Bei dem erfindungsgemässen Montageelement kann es sich um ein Montageelement handeln, das zur Verbindung von zwei flächigen Bauteilen, wie beispielsweise Türblättern, zur Montage von furnierten oder beschichteten Täferelementen und Wandverkleidungen oder für die Montage von Blenden, Sitzbanklehnen, Windschutzleisten, Spiegeln und dergleichen verwendet wird. Ein derartiges Montageteil weist ein Basisteil auf, das im wesentlichen topfförmig ausgebildet ist und einen Boden besitzt. Das Anbindemittel ist ein Keilhaken, der vom Boden des Basisteils abragt und dessen abgewinkelter Hakenabschnitt das Basisteil überragt. Zur Verbindung von zwei flächigen Bauteilen werden in den im montierten Zustand aneinanderliegenden Flächen der Bauteile jeweils wenigstens ein Montageelement in Sacklochbohrungen fixiert. Die Montageelemente sind dabei derart montiert, dass die Keilhaken um 180° gegeneinander verdreht sind und mit den freien Enden aufeinander zuweisen. Beim Zusammenschieben der beiden flächigen Bauteile gleiten die beiden überstehenden Keilhaken ineinander und gewährleisten eine sichere Verbindung.

Für eine spaltfreie Verbindung zweier flächiger Bauteile erweist es sich von Vorteil, wenn ein von seiner Bodeninnenfläche gemessener axialer Abstand des Hakenabschnitts grösser ist als eine axiale Wandstärke des abgewinkelten Hakenabschnitts.

Eine andere Ausführungsvariante des erfindungsgemässen Montageelements weist ein Anbindemittel auf, das als eine mittig im Basisteil angeordnete Gewindebohrung ausgebildet ist. Diese Ausführungsvariante des Montageelements erlaubt eine Schraubanbindung eines Bauteils, das einen korrespondierend abragenden Gewindezapfen aufweist. Es kann auch ein Montageelement vorgesehen sein, dessen Anbindemittel als ein mittig vom Basisteil abragender Gewindezapfen ausgebildet ist. Dieses Montageelement bildet das korrespondierende Gegenstück zu dem Montageelement mit Gewindebohrung.

Weitere Vorteile und Merkmale der Erfindung ergeben sich aus der nachfolgenden Beschreibung von Ausführungbeispielen des Montageelements unter Bezugnahme auf die schematischen Zeichnungen. Es zeigen:
- Fig. 1: eine perspektivische Darstellung eines ersten Ausführungsbeispiels der Erfindung;
- Fig. 2 und Fig. 3: perspektivische Ansichten von unten auf einen Spannkörper mit Exzenterschraube in zwei verschiedenen Stellungen ;
- Fig. 4: eine Draufsicht eines zweiten Ausführungsbeispiels der Erfindung mit entspannten Spannkörpern;
- Fig. 5: eine teilweise geschnittene perspektivische Darstellung des zweiten Ausführungsbeispiels gemäss Fig. 4;
- Fig. 6: eine Draufsicht des zweiten Ausführungsbeispiels der Erfindung mit ausgestellten Spannkörpern;
- Fig. 7: eine teilweise geschnittene perspektivische Darstellung des zweiten Ausführungsbeispiels gemäss Fig. 6;
- Fig. 8.: eine Schnittdarstellung von zwei miteinander verhakten Montageelementen; und
- Fig. 9: eine perspektivische Ansicht eines dritten Ausführungsbeispiels der Erfindung.

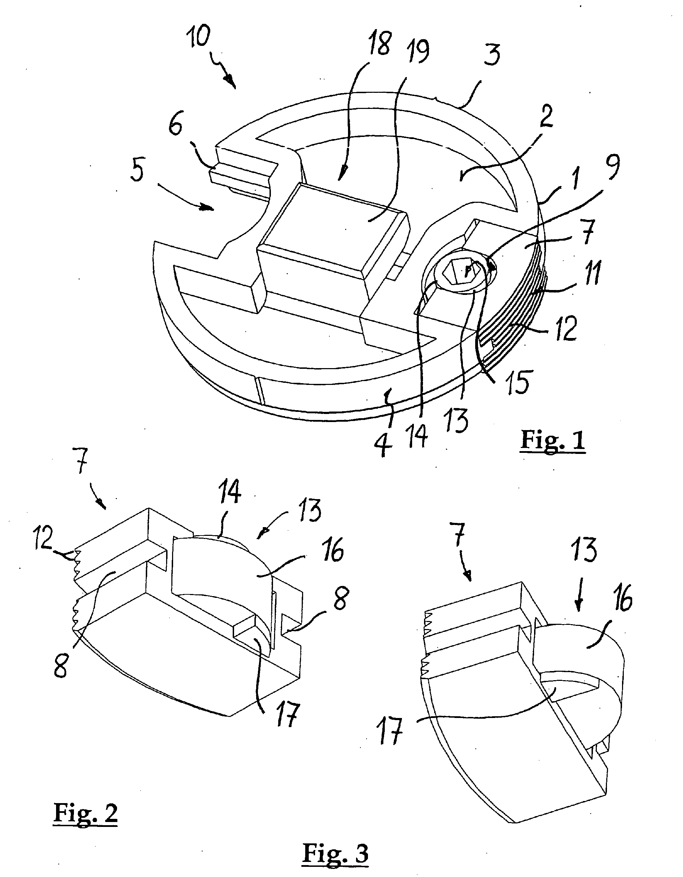

In den Darstellungen in Fig. 1 bis Fig. 9 tragen gleiche Elemente bzw. Bauteile jeweils gleiche Bezugszeichen.

Das in Fig. 1 dargestellten erste Ausführungsbeispiel eines erfindungsgemässen Montageelements für flächige Bauteile ist gesamthaft mit dem Bezugszeichen 10 versehen. Es weist ein zylindrisches Basisteil 1 mit einem Boden 2und einer umlaufenden Wandung 3 auf. Eine Umfangsfläche des insgesamt topfartig ausgebildeten Montageelements trägt das Bezugszeichen 4. Das Basisteil 1 hat beispielsweise einen Aussendurchmesser von etwa 15 mm bis etwa 100 mm. Die axiale Höhe des Basisteils 1 beträgt beispielsweise etwa 3 mm bis etwa 20 mm. Im montierten Zustand ist das Basisteil vollständig in eine Sacklochbohrung in der Fläche eines Bauteils versenkt. Vom Boden 2 des Basisteils 1 ragt ein Keilhaken 18 mit einem abgewinkelten Hakenabschnitt 19 ab, der das Basisteil überragt. Der von der Innenwandung des Bodens 2 des Basisteils gemessene Abstand des abgewinkelten Hakenabschnitts ist grösser als eine axiale Wandstärke des Hakenabschnitts. Eine der Innenwandung des Bodens 2 zugewandte Unterfläche des Hakenabschnitts liegt dabei üblicherweise auf dem Niveau der Oberseite der umlaufenden Wandung 3 des Basisteils 1. Soweit entspricht das Montageelement den aus dem Stand der Technik bekannten Montageelementen für flächige Bauteile.

Zum Unterschied von den bekannten Montageelementen erfolgt bei dem erfindungsgemässen Montageelement die Fixierung in der Sacklochbohrung nicht durch Verschrauben oder mit Nägeln. Vielmehr wird das Montageelement in der Bohrung verspannt. Dazu weist das Montageelement wenigstens einen Spannkörper 7 auf, der in einer Ausnehmung 5 des Basisteils radial verschiebbar gelagert ist. Ein Stellelement, das gemäss dem dargestellten Ausführungsbeispiel als eine Exzenterschraube 13 ausgebildet ist, ist derart verdrehbar, dass der Spannkörper 7 aus einer Ausgangsstellung, in der seine Stirnfläche 11 in die Umfangsfläche 4 des Basisteils 1 übergeht, radial in einer Position verstellbar ist, in der er die Umfangsfläche 4 des Basisteils 1 überragt. Das Stellelement kann auch als ein Keilelement ausgebildet sein, dessen axiale Verstellung zu einer radialen Verschiebung des Spannkörpers führt. Aus herstellungstechnischen Gründen und wegen der einfacheren Betätigbarkeit wird jedoch die Ausführungsvariante mit einer Exzenterschraube bevorzugt.

Das in Fig. 1 dargestellte Ausführungsbeispiel des Montageelements weist zwei Spannkörper 7 auf. Dabei wurde auf die Darstellung des zweiten Spannkörpers 7 verzichtet, um die Ausnehmung 5 im Basisteil 1 besser zu verdeutlichen. Die Spannkörper sind in den Ausnehmungen 5 zwangsgeführt. Dazu ist jede Ausnehmung 5 mit seitlichen Führungsschienen 6 versehen, die in seitliche Nuten 8 im Spannkörper 7 (Fig. 2) eingreifen. Dies ist auch bei dem in Fig.1 dargestellten Spannkörper 7 deutlich ersichtlich. Die Stirnfläche 11 des Spannkörpers 7 ist mit in Umfangsrichtung verlaufenden schneidenartigen Profilierungen 12 versehen, die sich beim Verspannen des Montageelements in einer Bohrung in die Bohrungswandung graben. Die Exzenterschraube 13 besitzt einen Schraubenkopf 14, in dem eine Aufnahme 15 für ein Schraubwerkzeug vorgesehen ist. Gemäss der Darstellung ist die Aufnahme 15 als ein Innensechskant ausgebildet. Die Aufnahme kann beispielsweise auch als ein einfachen Schlitz, als Torx- oder Kreuzschlitzaufnahme ausgebildet sein. An seiner dem Schraubenkopf 14 zugewandten Oberseite weist der Spannkörper 7 eine U-förmige Aussparung auf, deren Breite gleich oder geringfügig kleiner ist als der Aussendurchmesser des Schraubenkopfes 14. Die U-Schenkel umgreifen den Schraubenkopf 14 klemmend. Dadurch ist die Exzenterschraube 13 unverlierbar am Spannkörper 7 gehalten.

Fig. 2 und Fig. 3 zeigen einen Spannkörper in zwei Ansichten von unten. Es ist klar ersichtlich, dass die Exzenterschraube 13 unverlierbar im Spannkörper 7 gehalten ist. Fig. 2 zeigt die Exzenterschraube 13 in der Ausgangslage, in welcher der breitere Abschnitt des Exzenterkörpers innerhalb des Spannkörpers 7 angeordnet ist. Fig. 3 zeigt eine verdrehte Exzenterschraube 13, deren Exzenterkörper 16aus dem Spannkörper 7 ragt. In dieser Stellung der Exzenterschraube 13 wird der Spannkörper 7 durch den Exzenterkörper 16 radial in die Klemmstellung verschoben. Die Exzenterschraube 13 ist mit einem Anschlag 17 versehen, der die Drehbewegung begrenzt. Dadurch ist sichergestellt, dass die Exzenterschraube nicht überdreht wird, sondern nur zwischen den beiden Endstellungen hin- und hergedreht werden kann.

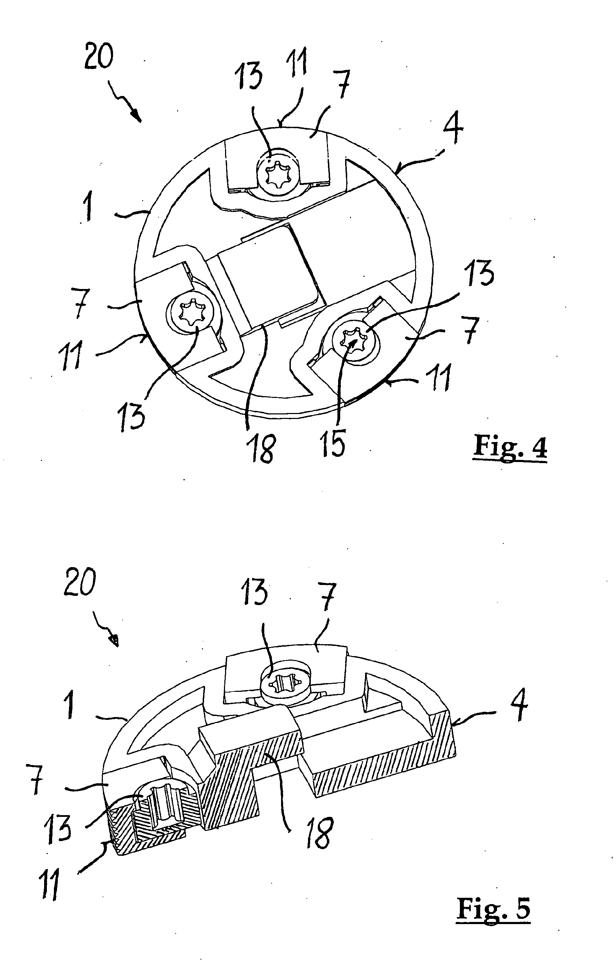

Fig. 4 und Fig. 5 zeigen ein zweites Ausführungsbeispiel des Montageelements, das - gesamthaft das Bezugszeichen 20 trägt. Der Aufbau des Montageelements 20 entspricht weitgehend demjenigen des Ausführungsbeispiels gemäss Fig. 1. Der Keilhaken trägt das Bezugszeichen 18. Zum Unterschied vom ersten das Bezugszeichen 18. Zum Unterschied vom ersten Ausführungsbeispiel weist das Basisteil 1 des zweiten Ausführungsbeispiels des Montageelements 20 drei Spannkörper 7 auf, die in gleichen Winkelabständen voneinander in Ausnehmungen des Basisteils 1 radial verschiebbar angeordnet sind. Die radiale Verschiebung erfolgt wiederum über Exzenterschrauben 13. In Fig. 4 ist angedeutet, dass die Aufnahme 15 für das Schraubwerkzeug eine Torxaufnahme ist. Fig. 4 und Fig. 5 zeigen die Spannkörper 7 im entspannten Zustand, in dem die Stirnflächen 11 der Spannkörper 7 einen Teil der Umfangsfläche 4 des Basisteils 1 bilden.

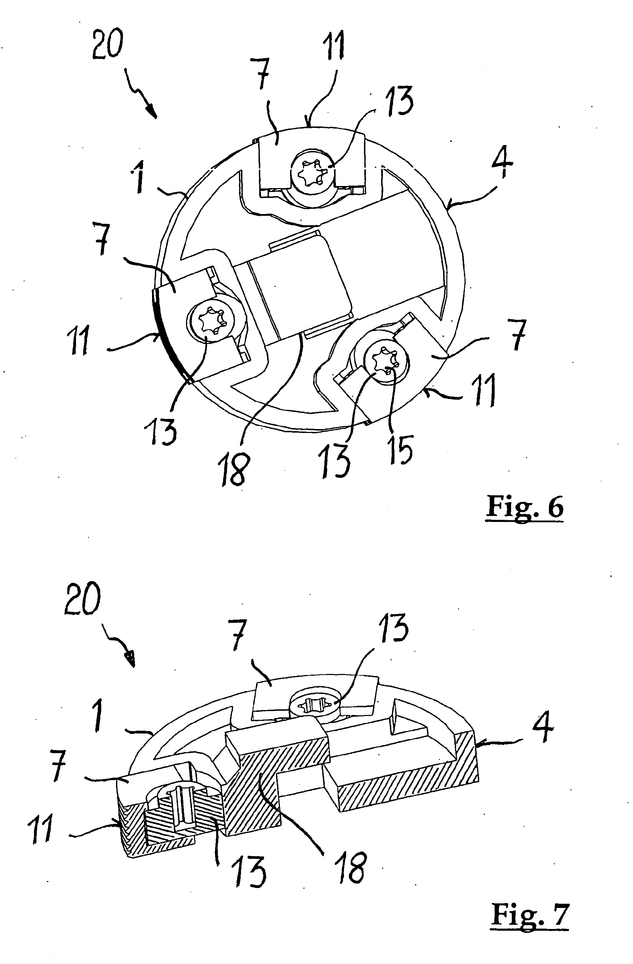

Fig. 6 und Fig. 7 zeigen zwei Ansichten des Montageelements 20 gemäss Fig. 4 und Fig. 5 mit ausgestellten Spannkörpern 7. Die Exzenterschrauben 13 sind soweit verdreht, dass die Spannkörper 7 radial aus den Ausnehmungen des Basisteils ragen.

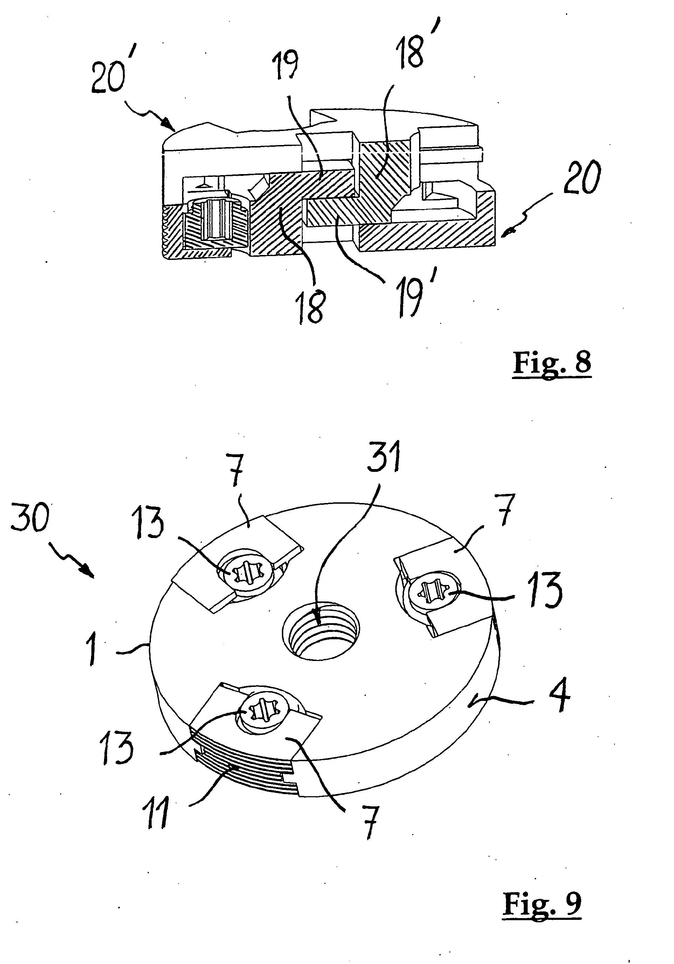

Fig. 8 zeigt zwei Montageelemente 20, 20' gemäss Fig. 4 - 7 in miteinander verhaktem Zustand. Zur Verbindung von zwei flächigen Bauteilen werden in den im montierten Zustand aneinanderliegenden Flächen der Bauteile jeweils wenigstens ein Montageelement 20, 20' in Sacklochbohrungen fixiert. Die Montageelemente 20, 20' sind dabei derart montiert, dass die Keilhaken 18, 18' um 180° gegeneinander verdreht sind und mit den freien Enden aufeinander zuweisen. Beim Zusammenschieben der beiden flächigen Bauteile gleiten die beiden überstehenden Hakenabschnitte 19, 19' ineinander und gewährleisten eine sichere Verbindung.

Fig. 9 zeigt ein weiteres Ausführungsbeispiel eines erfindungsgemäss modifizierten Montageelements, das gesamthaft mit dem Bezugszeichen 30 versehen ist. Das Montageelement 30 besitzt ein zylindrisches Basisteil 1, das drei Spannkörpern 7 aufweist, die über Exzenterschrauben 13 derart radial verstellbar sind, dass die Spannkörper 7 aus einer Ausgangslage, in der ihre Stirnflächen 11 einen Bestandteil der Umfangsfläche 4 des Basisteils 1 bilden, radial in eine Position verschoben werden, in der sie die Umfangsfläche 4 des Basisteils 1 überragen. Das Basisteil 1 ist mit einem Anbindemittel ausgestattet, das als mittig angeordnete Gewindebohrung 31 ausgebildet ist. Die Gewindebohrung 31 kann eine Sacklochbohrung oder eine durchgehende Bohrung sein. Die Gewindebohrung erlaubt die Anbindung von Bauteilen, die mit einem korrespondierenden Gewindezapfen ausgestattet sind. Eine nicht näher dargestellte weitere Ausführungsvariante des Montageelements weist dazu beispielsweise anstelle der Gewindebohrung einen Gewindezapfen auf, der mittig angeordnet vom Basisteil abragt.

Die Ausstattung des Montageelements mit verstellbaren Spannkörpern erlaubt eine sehr schnelle und einfache Fixierung in der Aufnahmebohrung eines Bauteils. Fehllagen des Montageelements können sehr einfach durch Lösen der Spannkörper, Nachdrehen des Montageelements und erneutes Verspannen behoben werden.

## Patentansprüche

1. Montageelement für flächige Bauteile mit einem zylindrischen Basisteil (1) mit einer Umfangsfläche (4) und einem Anbindemittel (18; 31), das zur Verbindung mit einem korrespondierend ausgebildeten Montageelement an einem zweiten Bauteil ausgebildet ist, **dadurch gekennzeichnet, dass** das Basisteil (1) wenigstens einen Spannkörper (7) aufweist, der in einer Ausnehmung (5) des Basisteils (1) radial verschiebbar angeordnet ist, und ein Stellelement vorgesehen ist, über welches der Spannkörper aus einer Ausgangsposition, in der eine Stirnfläche (11) des Spannkörpers (7) einen Abschnitt der Umfangsfläche (4) des Basisteils (1) bildet, radial in eine Lage verschiebbar ist, in welcher der Spannkörper (7) die Umfangsfläche (4) des Basisteils (1) überragt.

2. Montageelement gemäss Patentanspruch 1, **dadurch gekennzeichnet, dass** der Spannkörper (7) in der Ausnehmung (5) des Basisteils (1) radial zwangsgeführt ist.

3. Montageelement gemäss Patentanspruch 2, **dadurch gekennzeichnet, dass** der Spannkörper (7) seitliche Führungsnuten (8) aufweist und die Ausnehmung (5) des Basisteils (1) mit zwei seitlichen Führungsschienen (6) versehen ist, die in die Führungsnuten (8) des Spannkörpers (7) eingreifen.

4. Montageelement gemäss einem der Patentansprüche 1-3, **dadurch gekennzeichnet, dass** das Stellelement eine Exzenterschraube (13) ist, über welche sich der Spannkörper (7) am Basisteil (1) abstützt.

5. Montageelement gemäss Patentanspruch 4, **dadurch gekennzeichnet, dass** die Exzenterschraube (13) im Spannkörper (7) gehalten ist und der Spannkörper (7) an seiner dem Kopf (14) der Exzenterschraube (13) zugewandten Seite eine U-förmige Aussparung (9) aufweist, deren Breite gleich bzw. nur geringfügig kleiner ist als der Aussendurchmesser des Kopfes (14) der Exzenterschraube (13).

6. Montageelement gemäss einem der vorangehenden Ansprüche, **dadurch gekennzeichnet, dass** die Stirnfläche (11) des Spannkörpers (7) mit in Umfangsrichtung verlaufenden, schneidenartigen Profilierungen (12) versehen ist.

7. Montageelement gemäss einem der vorangehenden Ansprüche, **dadurch gekennzeichnet, dass** die Exzenterschraube (13) mit einem Anschlag (17) versehen ist, der die Verdrehung der Exzenterschraube (13) begrenzt.

8. Montageelement gemäss einem der vorangehenden Ansprüche, **dadurch gekennzeichnet, dass** das Basisteil (1) drei Spannkörper (7) aufweist, die in Ausnehmungen (5) radial verschiebbar angeordnet und über zugeordnete Exzenterschrauben (13) verstellbar sind.

9. Montageelement gemäss Anspruch 8, **dadurch gekennzeichnet, dass** die Spannkörper (7) in gleichen Winkelabständen voneinander angeordnet sind.

10. Montageelement gemäss einem der vorangehenden Ansprüche, **dadurch gekennzeichnet, dass** das Basisteil (1) im wesentlichen topfförmig ausgebildet ist und einen Boden (2) aufweist und das Anbindemittel ein Keilhaken (18) ist, der vom Boden (2) des Basisteils (1) abragt und dessen abgewinkelter Hakenabschnitt (19) das Basisteil (1) überragt.

11. Montageelement gemäss Anspruch 10, **dadurch gekennzeichnet, dass** ein von der Bodeninnenfläche gemessener Abstand des Hakenabschnitts (19) grösser ist als eine axiale Wandstärke des abgewinkelten Hakenabschnitts (19).

12. Montageelement gemäss einem der Ansprüche 1-9, **dadurch gekennzeichnet, dass** das Anbindemittel eine mittig im Basisteil (1) angeordnete Gewindebohrung (31) ist.

13. Montageelement gemäss einem der Ansprüche 1-9, **dadurch gekennzeichnet, dass** das Anbindemittel ein mittig vom Basisteil abragender Gewindezapfen ist.

## Claims

1. Mounting element for plane components with a cylindrical base part (1) with a circumferential surface (4) and a binding means (18; 31) which is configured for the connection with a mounting element configured correspondingly on a second component, **characterized in that** the base part (1) has at least a clamping body (7) which is placed radially displaceable in a recess (5) of the base part (1) and an adjusting element is provided over which the clamping body is radially displaceable from a starting position in which a front face (11) of the clamping body (7) forms a section of the circumferential surface (4) of the base part (1) into a position in which the clamping body (7) rises above the circumferential surface (4) of the base part (1).

2. Mounting element according to claim 1, **characterized in that** the clamping body (7) is positively radially guided in the recess (5) of the base part (1).

3. Mounting element according to claim 2, **characterized in that** the clamping body (7) has lateral guiding grooves (8) and the recess (5) of the base part (1) is provided with two lateral guiding rails (6) which engage into the guiding grooves (8) of the clamping body (7).

4. Mounting element according to any of the claims 1 to 4, **characterized in that** the adjusting element is an eccentric screw (13) by which the clamping body (7) is supported on the base part (1).

5. Mounting element according to claim 4, **characterized in that** the eccentric screw (13) is held in the clamping body (7) and the clamping body (7) has a U-shaped recess (9) on its side turned to the head (14) of the eccentric screw (13), recess the width of which is equal to or only slightly smaller than the outer diameter of the head (14) of the eccentric screw (13).

6. Mounting element according to any of the preceding claims, **characterized in that** the front face (11) of the clamping body (7) is provided with cutting edge like profiles (12) extending in the circumferential direction.

7. Mounting element according to any of the preceding claims, **characterized in that** the eccentric screw (13) is provided with an abutment (17), which limits the torsion of the eccentric screw (13).

8. Mounting element according to any of the preceding claims, **characterized in that** the base part (1) has three clamping bodies (7) which are placed radially displaceable in recesses (5) and are adjustable by associated eccentric screws (13).

9. Mounting element according to claim 8, **characterized in that** the clamping bodies (7) are placed at equal angular distances.

10. Mounting element according to any of the preceding claims, **characterized in that** the base part (1) is configured substantially pot-shaped and has a bottom (2) and the binding means is a cuneiform hook (18) which comes from the bottom (2) of the base part (1) and the offset hook section of which rises above the base part (1).

11. Mounting element according to claim 10, **characterized in that** a distance of the hook section measured from the bottom inner surface is bigger than an axial wall thickness of the offset hook section (19).

12. Mounting element according to any of the claims 1 to 9, **characterized in that** the binding means is a threaded bore (31) placed in the middle of the base part (1).

13. Mounting element according to any of the claims 1 to 9, **characterized in that** the binding means is a threaded stem coming out of the middle of the base part.

## Revendications

1. Elément de montage pour composants plans avec une partie de base cylindrique (1) avec une surface circonférentielle (4) et un moyen d'attache (18 ; 31) qui est configuré pour la jonction avec un élément de montage configuré de manière correspondante sur un second composant, **caractérisé en ce que** la partie de base (1) présente au moins un corps de serrage (7) qui est placé déplaçable radialement dans un évidement (5) de la partie de base (1) et qu'il prévu un élément de réglage par l'intermédiaire duquel le corps de serrage est déplaçable radialement d'une position de départ, dans laquelle la surface frontale (11) du corps de serrage (7) forme une portion de la surface périphérique (4) de la partie de base (1), à une position dans laquelle le corps de serrage (7) fait saillie au-dessus de la surface périphérique (4) de la partie de base (1).

2. Elément de montage selon la revendication 1, **caractérisé en ce que** le corps de serrage (7) est guidé de forcé radialement dans l'évidement (5) de la partie de base (1).

3. Elément de montage selon la revendication 2, **caractérisé en ce que** le corps de serrage (7) présente des rainures de guidage latérales (8) et que l'évidement (5) de la partie de base (1) est pourvue de deux rails de guidage latéraux (6) qui s'engrènent dans les rainures de guidage (8) du corps de serrage (7).

4. Elément de montage selon l'une des revendications 1 à 3, **caractérisé en ce que** 'élément de réglage est une vis excentrique (13) par laquelle le corps de serrage (7) s'appuie sur la partie de base (1).

5. Elément de montage selon la revendication 4, **caractérisé en ce que** la vis excentrique (13) est maintenue dans le corps de serrage (7) et le corps de serrage (7) présente, sur son côté tourné vers la tête (14) de la vis excentrique (13), un évidement en forme d'U dont la largeur est égale ou seulement légèrement plus petite que le diamètre extérieur de la tête (14) de la vis excentrique (13).

6. Elément de montage selon l'une des revendications précédentes, **caractérisé en ce que** la surface frontale (11) du corps de serrage (7) est pourvue de profilés (12) de type lame dans le sens de la circonférence.

7. Elément de montage selon l'une des revendications précédentes, **caractérisé en ce que** la vis excentrique (13) est pourvue d'une butée (17) qui limite la torsion de la vis excentrique (13).

8. Elément de montage selon l'une des revendications précédentes, **caractérisé en ce que** la partie de base (1) présente trois corps de serrage (7) qui sont placés déplaçables radialement dans des évidements (5) et qui sont réglables par des vis excentriques qui leur sont associées.

9. Elément de montage selon la revendication 8, **caractérisé en ce que** les corps de serrage (7) sont placés à des distances angulaires égales l'un de l'autre.

10. Elément de montage selon l'une des revendications précédentes, **caractérisé en ce que** la partie de base (1) est configurée essentiellement en forme de pot et présente un fond (2) et le moyen d'attache est un crochet cunéiforme (18) qui fait saillie du fond (2) de la partie de base 81) et dont la section de crochet coudée (19) dépasse la partie de base (1).

11. Elément de montage selon la revendication 10, **caractérisé en ce qu'**une distance de la section de crochet (19) qui est mesurée à partir de la surface intérieure du fond est plus grande qu'une épaisseur de paroi axiale de la section de crochet coudée (19).

12. Elément de montage selon l'une des revendications 1 à 9, **caractérisé en ce que** le moyen d'attache est une forure filetée (31) placée au milieu dans la partie de base (1).

13. Elément de base selon l'une des revendications 1 à 9, **caractérisé en ce que** le moyen d'attache est un tourillon fileté qui fait saillie du milieu de la partie de base.
